# EUROPEAN PATENT APPLICATION

(11) **EP 4 478 587 A1**
(43) Date of publication of application: **18.12.2024**
(21) Application number: 23179791.1
(22) Date of filing: 16.06.2023
(51) Int. Cl.: H02K 3/28, H02K 7/18, H02K 21/22

(54) **STATOR OF AN ELECTRICAL MACHINE**

(71) Applicant: Siemens Gamesa Renewable Energy A/S, 7330 Brande (DK)
(72) Inventor: Azar, Ziad, Sheffield S10 4ED (GB); Duke, Alexander, Sheffield S10 5SN (GB); Groendahl, Erik, 8653 Them (DK)
(74) Representative: SGRE-Association

(57) **Abstract**

It is described a stator (110) of an electrical machine (100), in particular permanent magnet synchronous machine, comprising: plural stator segments (S1, S2) arranged circumferentially adjacent to each other to form a ring covering a whole circumference; each stator segment (S1, S2) having plural teeth (115) with plural slots (116) in between the teeth and having a, in particular exactly one, multiple phase winding set (117) at least partially arranged in the slots; wherein the stator segments are grouped in at least two stator segment groups; wherein winding sets of each group of the stator segment groups are connected in parallel to each other; wherein each of the stator segments (S1, S2) of any considered stator segment group has at least one stator segment of another stator segment group different from the considered stator segment group immediately circumferentially adjacent arranged.

## Description

### Field of invention

The present invention relates to a stator of an electrical machine, relates to an electrical machine, in particular permanent magnet synchronous machine, and further relates to a wind turbine comprising the electrical machine.

### Art Background

In large multi-system (multiple winding set or multiple converter) electrical machines the stator is often circumferentially segmented to ease production, transportation and maintenance. Thereby, plural stator segments are circumferentially arranged to each other to form a ring forming a whole circumference. Further, the stator windings can electrically be divided into two or more electrical systems. This conventionally leads to a designed decision based on the segment layout per electrical system. A conventional generator may for example have a quadrant layout, where winding sets belonging to one system form a quadrant by arranging for example three stator segments with its windings adjacent to each other. For example three stator segments of one system per quadrant may be provided with a total of twelve segments of the entire stator.

It has however been observed that the conventional multi stator segment electrical machines may have problems in particular when one or more of the winding systems fails.

Thus, there may be a need for a stator of an electrical machine, for an electrical machine and for a wind turbine, wherein a reliable and safe operation may be improved or ensured, in particular when one or more winding sets or converters connected to the electrical machine or comprised within the electrical machine fail, in particular have short circuit condition.

### Summary of the Invention

This need may be met by the subject matter according to the independent claims. Advantageous embodiments of the present invention are described by the dependent claims.

According to an embodiment of the present invention, it is provided a stator of an electrical machine, in particular permanent magnet synchronous machine, comprising: plural stator segments arranged circumferentially adjacent to each other to form a ring covering a whole circumference; each stator segment having plural teeth with plural slots in between the teeth and having a, in particular exactly one, multiple phase winding set at least partially arranged in the slots (and substantially filling the slots); wherein the stator segments are grouped in at least two stator segment groups; wherein winding sets of each group (e.g. S1, S2, S3, S4) of the stator segment groups are connected in parallel to each other; wherein each of the stator segments of any considered stator segment group has at least one stator segment of another stator segment group different from the considered stator segment group immediately circumferentially adjacent arranged.

The stator may be an inner stator. The stator segments may each span a (angle) portion of a whole circumference or a portion of a ring, for example covering an angle range of for example between 10° and 90°. Each stator segment may comprise for example exactly one multiple-phase winding set (or in other embodiments two or more multiple winding sets). According to a particular embodiment however, each stator segment comprises exactly one, for example a three-phase winding set, which substantially covers or fills all the slots of the considered stator segment.

The stator segments may for example be grouped in two, three or four or even more segment groups. Each of the stator segment groups is also referred to as forming one "electrical system". Each of the stator segment groups may provide multiple phase electrical power during operation, in particular three-phase electrical power.

The stator segments of a considered stator segment group may be arranged at different circumferential positions and may be in particular spaced apart such that it is avoided or reduced that stator segments of each of a considered stator segment group are immediately adjacent arranged. When at least one of the stator segments of one considered stator segment group fails or is faulty (for example by a short-circuit the respective winding set of the stator segment), the entire stator segment group may be faulty or may not be operated, due to the parallel connection. Nevertheless, when one of the stator segment groups is faulty or fails, the electrical machine may still further be operated with remaining functional stator segment groups.

In a conventional stator, under internal or external short-circuited conditions, the air gap attractive force between the rotor and the stator across the short-circuited segments may increase significantly, in comparison with segments under healthy or functional conditions. Thus in these areas the rotor will conventionally move away from the stator. Due to the conventional quadrant layout of a segmented stator, the two healthy quadrants may see a decrease in air gap due to the ovalization of the rotor. Conventionally, ovalization of the rotor may put an increased force on the rotor structure thus either requiring a more robust structure (extents and weight), a larger air gap (lower performance) or leading to potential damage.

Ovalization of the rotor is, according to embodiments of the invention, reduced, such that the operation of the electrical machine may be maintained or continued, even under a short-circuit condition of one electrical system, i.e. failure of one of the stator segment groups or converter systems. Embodiments of the present invention avoid or reduce ovalization of the rotor of an electrical machine due to the configuration and design of the stator, in particular due to the arrangement of stator segments.

When to each of the stator segments of any considered stator segment groups, at least one stator segment different from the considered stator segment group is immediately circumferentially adjacent arranged, the ovalization may be reduced, when one stator segment of a stator segment group fails or becomes faulty.

Two considered stator segments may be "immediately circumferentially adjacent arranged" when the two considered stator segments do not have any other stator segment in between the considered two stator segments in the circumferential direction.

In particular, the stator segments may be alternatingly arranged in the sense that immediately circumferentially adjacent to a stator segment of a considered stator segment group there is arranged a stator segment of a stator segment group different from the considered stator segment group. There may be none of the stator segments of any considered stator segment group which has not at least one stator segment different from the considered group immediately circumferentially adjacent arranged.

By using a sequential arrangement of system/segment layout, the forces acting on the rotor and/or the stator can be more balanced and distributed during a single or multiple system short circuit.

According to an embodiment of the present invention, each of the stator segments of any considered stator segment group has two stator segments of one or more stator segment group different from the considered stator segment group immediately circumferentially adjacent arranged.

This embodiment may for example be realized when the number of stator segment groups is two or four. Thus, on both circumferential sides, of each of the stator segments of any considered stator segment groups, two stator segments are arranged which belong to another group or to two other groups each one being different from the considered stator segment group. In this embodiment, there is no stator segment of any considered stator segment group which has immediately adjacent thereto a stator segment which belongs to the same considered stator segment group. Thereby, ovalization may further be avoided or reduced in an improved manner.

According to an embodiment of the present invention, the number of stator segment groups is two; wherein each of the stator segments of any considered stator segment group has two stator segments different from the considered stator segment group immediately circumferentially adjacent arranged.

Thereby for example embodiments of the present invention support a stator having exactly two stator segment groups and further embodiments support a stator having for example exactly four stator segment groups. Thereby, great flexibility may be provided.

According to an embodiment of the present invention, the number of stator segment groups is four; wherein each of the stator segments of any considered stator segment group has two stator segments of one or more stator segment group(s), in particular belonging to two different stator segment groups, being different from the considered stator segment group immediately circumferentially adjacent arranged.

The two stator segments of one or more groups each being different from the considered stator segment group may belong to one stator segment group or may belong to two different stator segment groups. Thereby, great flexibility for the stator design may be provided.

According to an embodiment of the present invention, the number of stator segment groups is four; wherein each of the stator segments of any considered stator segment group has: one stator segment belonging to a stator segment group different from the considered stator segment group immediately circumferentially adjacent arranged, and one stator segment belonging to the considered group immediately circumferentially adjacent arranged.

In this embodiment for example two stator segments belonging to a same (considered) stator segment group are immediately circumferentially adjacent arranged. Also in this embodiment, ovalization of the stator and/or rotor may be reduced, even in the case where one stator segment fails or corresponding stator segment group fails.

According to an embodiment of the present invention, the stator further comprises multiple, in particular multiple phase, bus bars, providing at least one bus bar for each stator segment group; wherein the winding sets of each group of the stator segment groups are connected in parallel to each other using the bus bars.

The bus bars may be arranged in a region of the stator radially centrally located, i.e. in a radially inner portion of the stator. This embodiment may in particular apply for an electrical machine having an inner stator and an outer rotor. The bus bars may in particular comprise for each of the multiple phases one electrical conductor. Thus the bus bars may comprise electrically conductive material for effectively electrically connecting the winding segments of all stator segments belonging to one stator segment group. Parallel connection may increase the capacity of power production during operation of the electrical machine. The bus bars may cover or span an annular section of for example an angle range between 45° and 180°.

According to an embodiment of the present invention, the stator further comprises two or more terminal boxes, to each of which some of the winding sets and/or bus bars are connected.

The terminal boxes may allow to electrically connect the parallelly connected winding sets to plural converters, wherein for each stator segment group one or more converters may be provided.

According to an embodiment of the present invention, the stator further comprises multiple converters thereby providing for each stator segment group at least one converter, wherein the winding sets of each stator segment group are connected to an associated converter; wherein a number of stator segment groups equals in particular a number of the converters.

Each converter may comprise an AC/DC-converter portion, a DC-link and a DC/AC-converter portion. The AC/DC- or DC/AC-converter portions may each comprise multiple controllable switches, such as power transistors, which may be operated or switched by providing or supplying appropriate gate driver signals to gates of the power switches or power transistors.

Depending on the capacity or rating of the converters, the winding sets of one stator segment group may either be connected to one or more converters.

According to an embodiment of the present invention, the winding sets of different stator segment groups are disconnected from each other. Thereby, the different winding sets of different stator segment groups may be operated independently from each other. Thereby, even if a winding set (or connected converter) of one stator segment group fails, the winding sets of other stator segment groups may still be continued to be operated in order to still produce electrical energy for example in a wind turbine.

According to an embodiment of the present invention, coils of one winding sets of each stator segment are arranged in the slots according to a concentrated or distributed winding topology, and/or wherein for at least one phase, coils of the winding set of each stator segment are connected to each other in parallel and/or in series, and/or wherein wires of different phases of each winding set are connected at a common connection point (e.g. star point). Thereby, great flexibility may be provided. Also conventionally utilized winding topology and connection methodology may be supported.

According to an embodiment of the present invention, a number of stator segment groups is two or four or six or a greater number, wherein a number of segments is a multiple of the number of stator segments, in particular 12, 16, 20, 24 or a greater number. Thereby, a large number of different stator designs may be supported.

According to an embodiment of the present invention it is provided an electric machine, in particular permanent magnet synchronous machine, comprising: a stator according to one of the preceding embodiments; a rotor, in particular outer rotor, rotatably mounted relative to the stator; in particular for each of the stator segment groups, a converter connectable or connected to the winding set of the respective stator segment group.

The rotor may have mounted thereon along the circumferential direction, plural permanent magnets. An air gap may be present between a radially inner surface of the plural magnets and the radially outer surface of the stator. Due to the stator design, ovalization of the rotor and/or the stator during operation may be avoided or reduced, when for example one or more of the winding sets of one or more particular stator winding groups is faulty, in particular exhibits a short-circuit.

According to an embodiment of the present invention, the electrical machine is configured to be operated if at least one stator segment group fails, in particular due to a short-circuit condition. The air gap size may, in this partial failed condition, deviate only slightly from a required or designed air gap size.

According to an embodiment of the present invention, it is provided a wind turbine including an electrical machine according to the preceding embodiment as a generator.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Embodiments of the present invention are now described with reference to the accompanying drawings. The invention is not restricted to the illustrated or described embodiments.
Fig. 1 schematically illustrates an electrical machine according to an embodiment of the present invention;
Fig. 2 schematically illustrates a wind turbine according to an embodiment of the present invention;
Fig. 3 illustrates a conventional electrical machine;
Fig. 4 schematically illustrates schematically two embodiments of an electrical machine;
Fig. 5 schematically illustrates an electrical machine according to an embodiment of the present invention with particular bus bar configuration;
Fig. 6 schematically illustrates an electrical machine according to an embodiment of the present invention; and
Fig. 7 schematically illustrates an electrical machine according to an embodiment of the present invention with particular bus bar configuration.

### Detailed Description

The illustration in the drawings is in schematic form. It is noted that in different figures, elements similar or identical in structure and/or function are provided with the same reference signs or with reference signs, which differ only within the first digit. A description of an element not described in one embodiment may be taken from a description of this element with respect to another embodiment.

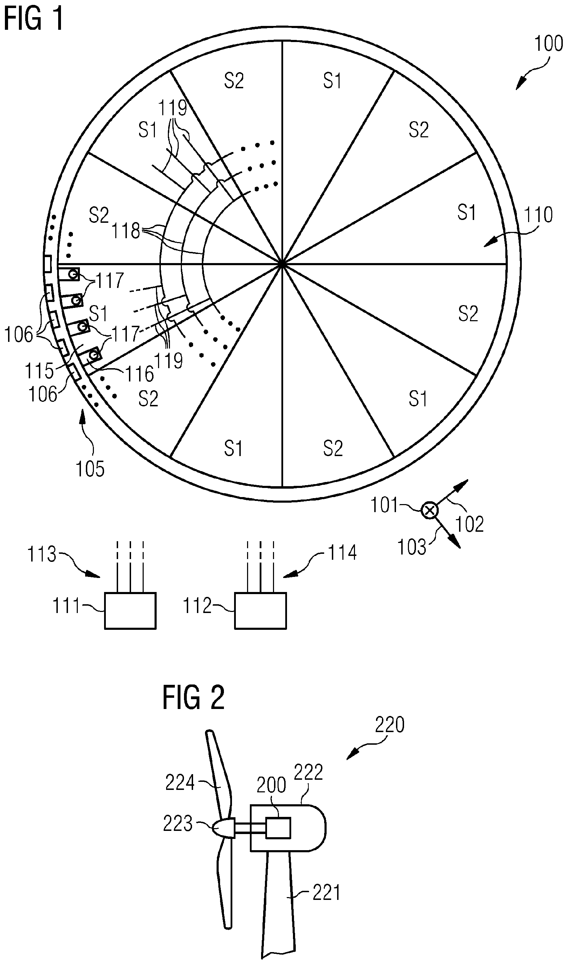

The electrical machine 100 schematically illustrated in **Fig. 1** (as viewed along an axial direction 101 being perpendicular to a circumferential direction 102 and also being perpendicular to a radial direction 103) a stator 110 according to an embodiment of the present invention and further comprises a rotor 105, which is rotatably mounted relative to the stator 110.

The rotor 105 has plural magnets 106 mounted or arranged circumferentially adjacent to each other. In Fig. 1 only some of the magnets 106 are illustrated, but the magnets 106 are mounted across the entire circumference of the rotor 105.

The stator 110 of the electrical machine 100 comprises the plural stator segments S1, S2 (in the embodiment illustrated in Fig. 1 comprising six stator segments S1 and six stator segments S2), which are arranged circumferentially adjacent to each other to form a ring covering a whole circumference. Each of the stator segments S1, S2 has plural teeth 115 with plural slots 116 in between and having a multiple phase winding set 117 at least partially arranged in the slots 116. The stator segments, i.e. the six S1 stator segments and the six S2 stator segments are grouped in at least two stator segment groups namely first group comprising all S1 stator segments and a second group containing all the S2 stator segments.

Using electrical conductors 118 (also which may be configured as bus bars) the winding set of each of the S1 stator segments are connected in parallel. In the embodiment illustrated in Fig. 1, each of the first stator segments S1 (belonging to the first group of stator segments) has a first winding set 117 (only schematically illustrated in Fig. 1) and output conductors 119a, b, c, i.e. for each phase A, B, C one output conductor, which is connected to the respective output conductor 119a, b, c of each of the other stator segments S1 which belong to the stator segment group.

As can further be appreciated from Fig. 1, each of the stator segments (for example S1 or S2) of any considered stator segment group (for example the first group or the second group) has at least one segment of another group different from the considered stator segment group immediately circumferentially adjacent arranged. For example, the stator segment S1 has on both circumferential sides a stator segment S2 immediately circumferentially adjacent arranged, i.e. on both sides the stator segment belonging to the second stator segment group.

Thus, in the embodiment illustrated in Fig. 1, each of the stator segments (for example S1 or S2) of any considered stator segment group has two stator segments (for example S2) different from the considered stator segment group (for example the first group) immediately circumferentially adjacent arranged.

The electrical machine 100 further comprises a first converter 111 and a second converter 112. The first converter 111 is connected to a conductors or bus bar 113 belonging to the first stator segment group comprising the stator segments labelled with S1 in Fig. 1. The second converter 112 is connected to the conductors or bus bar 114 being connected to all winding sets of the second stator winding group comprising the stator segments S2.

Similarly, as the stator segments S1 of the first stator segment group, also the winding sets of stator segments S2 of the second stator group are connected in parallel (not illustrated) and are then connected using the conductors 114 to the second converter 112. The parallelly connected winding sets of the first stator segments of the first stator segment group are connected using the conductors 113 to the first converter 111.

In the embodiment illustrated in Fig. 1, the number of stator segment groups is two, namely comprising the first stator segment group and the second stator segment group. In the embodiment illustrated in Fig. 1, each of the stator segments (for example S1) of any considered stator segment group, has two stator segments (for example S2) different from the considered stator segment group immediately circumferentially adjacent arranged.

Fig. 1 thereby illustrates an electrical machine with 12 stator segments.

**Fig. 2** schematically illustrates a wind turbine 220 according to an embodiment of the present invention. The wind turbine comprises a wind turbine tower 221 on top of which a nacelle 222 is mounted. The nacelle comprises an electrical machine 200 according to an embodiment of the present invention, which for example may be configured as the electrical machines illustrated in Figs. 1, 4, 5, 6, 7 for example. The wind turbine 220 further comprises a hub 223 at which plural rotor blades 224 are mounted, wherein the hub 223 is mechanically connected to the rotor of the electrical machine 200.

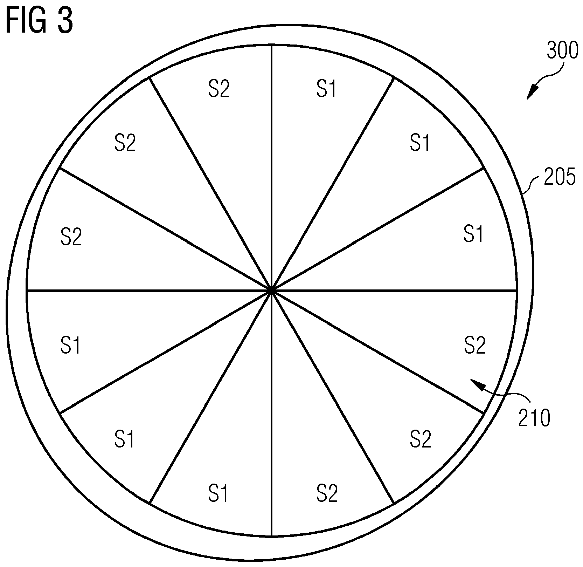

**Fig. 3** schematically illustrates a conventional electrical machine 300 comprising a quadrant layout, wherein three of the S1 stator segments are immediately circumferentially adjacent arranged and also three of the S2 stator segments are circumferentially immediately adjacent arranged. This leads to an ovalization of the rotor 205 which may be reduced or even avoided according to embodiments of the present invention.

If a short-circuit for example occurs in the first stator segment group (comprising stator segments S1) in the electrical machine 100 illustrated in Fig. 1, an attractive force between the rotor and the stator would reduce at 6 points above the faulted segments. Therefore, the rotor would deform less, i.e. less ovalization than in the quadrant layout design illustrated in the conventional electrical machine of Fig. 3.

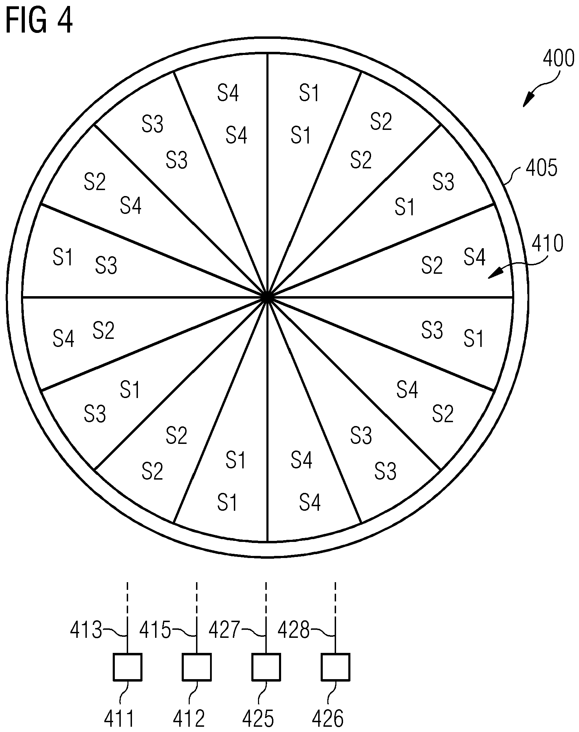

**Fig. 4** illustrates an electrical machine 400 according to another embodiment of the present invention, which comprises 16 stator segments S1, S2, S3, S4, ... namely four stator segments S1, four stator segments S2, four stator segments S3, and four stator segments S4. The stator segments S1 are grouped into a first group, the stator segments S2 are grouped into a second group, the stator segments S3 are grouped in a third group and the stator segments S4 are grouped in a fourth group of stator segments. The number of stator segment groups is four in the embodiment illustrated in Fig. 4.

Each of the stator segments (for example S1) of any considered stator segment group has two stator segments, in particular belonging to two different stator segment groups, being different from the considered stator segment group, immediately circumferentially adjacent arranged. For example, the stator segment S1 has to one side the stator segment S2 immediately circumferentially arranged and to the other circumferential side the stator segment S4 immediately circumferentially adjacent arranged.

The embodiment illustrated in Fig. 4 may be considered as a sequential system layout which may ensure a balanced and distributed radial force during single or multiple phase short-circuit events with no contribution to ovalization.

By not illustrated bus bars or conductors the winding sets of each of the stator segments belonging to one stator segment group are connected in parallel to each other and connected to a respective converter. In Fig. 4 the four converters 411, 412, 425, 426 are illustrated, wherein the first converter 411 is electrically connected to the winding sets of the first group by a conductor group 413, the second converter 412 is connected by a conductor group 415 to the winding sets of the second group of stator segments. The third converter 425 is connected using a conductor set 427 to the winding set of the third group of stator segments. The fourth converter 426 is connected using a conductor set 428 to the winding sets of the fourth group of stator segments.

In a first configuration of the electrical machine, the stator segments are immediately arranged adjacent to each other in the circumference according to the sequence:
S1, S2, S3, S4, S1, S2, S3, S4, S1, S2, S3, S4, S1, S2, S3, S4.

In a second configuration the stator segments are circumferentially immediately adjacent arranged in the following order:
S1, S2, S1, S2, S3, S4, S3, S4, S1, S2, S1, S2, S3, S4, S3, S4.

In the latter embodiment thereby also the number of stator segment groups is four and each of the stator segments of any considered stator segment group has one stator segment belonging to a stator segment group different from the considered group immediately circumferentially adjacent arranged and one stator segment belonging to the considered group immediately circumferentially adjacent arranged.

In the second embodiment illustrated in Fig. 4, circumferential neighbours of a particular stator segment may be two stator segments belonging to a same group or to two different groups of stator segments.

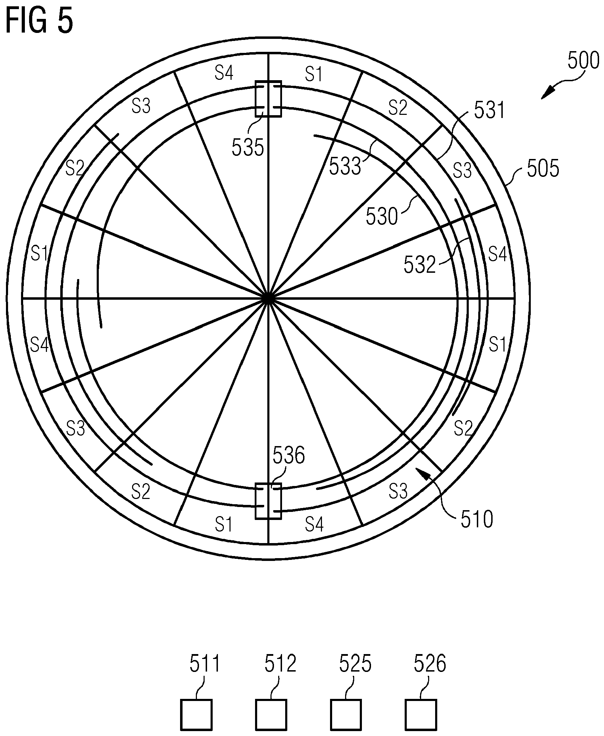

**Fig. 5** schematically illustrates an electrical machine 500 according to an embodiment of the present invention which has the stator segment layout being the same as the first variant illustrated in Fig. 4 (i.e. the stator segment as labelled in the outer ring of the stator in Fig. 4). In the embodiment 500, further bus bars 530, 531, 532, 533 are illustrated, which provide the parallel connection of winding sets of stator segments belonging to the same group.

The multiple bus bars 530, 531, 532, 533 schematically illustrated are arranged in a radially inner portion of the stator 510, i.e. radially away from the not illustrated tooth and slots towards an axial center of the stator.
In reality, these busbars 530, ..., 533 could be arranged next to the end windings.

Further, the electrical machine 500 comprises two terminal boxes 535, 536 to which some of the bus bars 530, ... 533 are connected. To the terminal boxes 535, 536 in total four converters 511, 512, 525, 526 may be electrically connected, as is schematically illustrated in Fig. 5.

The converters may provide for each stator segment group at least one converter, in particular exactly one converter. The winding sets of different stator segment groups are disconnected from each other. Coils of the winding sets of each stator segment may be arranged in the slots 116 according to a concentrated or distributed winding topology.

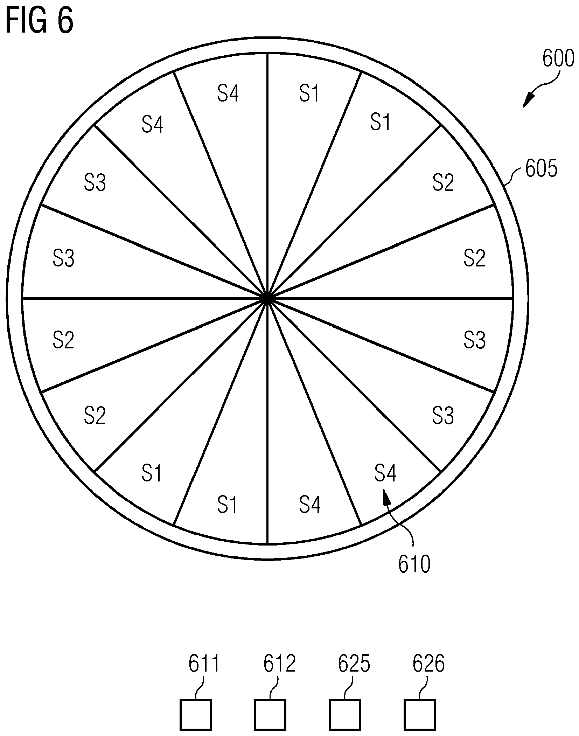

**Fig. 6** schematically illustrates an electrical machine 600 according to still a further embodiment of the present invention. The stator segments are arranged circumferentially adjacent to each other in the circumferential direction according to the following sequence:
S1, S1, S2, S2, S3, S3, S4, S4, S1, S1, S2, S2, S3, S3, S4, S4.

This stator segment layout or design may have advantages in terms of reducing cabling/bus bar requirements as well as reducing rotor loss during reduced converter operation. However, risk of ovalization of the rotor during single or multiple system short-circuit events may be present.

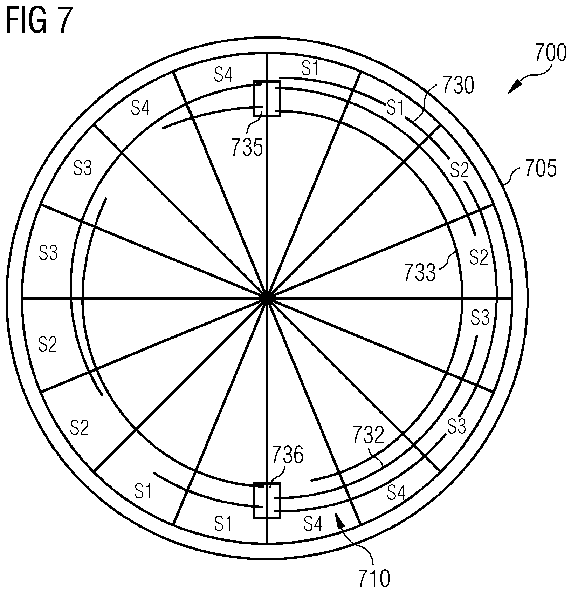

**Fig. 7** illustrates an electrical machine 700 according to an embodiment of the present invention, which has the same stator segment layout as the embodiment illustrated in Fig. 6. Furthermore, layout of bus bars 730, 731, 732, 733 is illustrated. Further the embodiment illustrated in Fig. 7 comprises the terminal boxes 735, 736 to which some of the bus bars are connected.

In Figs. 5 and 7, each single line represents a three conductor bus bar (one for each phase). The terminal boxes 535, 735, 536, 736 are in different positions and there may be more or less than two terminal boxes provided. 2x3-phase cable sets exit each of the terminal boxes in the examples illustrated in Figs. 5 and 7 and are then connected to separate converters.

In the embodiment illustrated in Fig. 7, the bus bar length may be decreased by 25% compared to the situation illustrated in Fig. 5.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Stator (110) of an electrical machine (100), in particular permanent magnet synchronous machine, comprising:
plural stator segments (S1, S2) arranged circumferentially adjacent to each other to form a ring covering a whole circumference;
each stator segment (S1, S2) having plural teeth (115) with plural slots (116) in between the teeth and having a, in particular exactly one, multiple phase winding set (117) at least partially arranged in the slots;
wherein the stator segments are grouped in at least two stator segment groups;
wherein winding sets of each group of the stator segment groups are connected in parallel to each other;
wherein each of the stator segments (S1, S2) of any considered stator segment group has at least one stator segment of another stator segment group different from the considered stator segment group immediately circumferentially adjacent arranged.

2. Stator according to the preceding claim, wherein each of the stator segments (S1, S2, S3, S4) of any considered stator segment group has two stator segments of one or more stator segment group different from the considered stator segment group immediately circumferentially adjacent arranged.

3. Stator according to one of the preceding claims,
wherein the number of stator segment groups is two;
wherein each of the stator segments (S1, S2) of any considered stator segment group has two stator segments different from the considered stator segment group immediately circumferentially adjacent arranged.

4. Stator according to one of the preceding claims 1 or 2,
wherein the number of stator segment groups is four;
wherein each of the stator segments (S1, S2, S3, S4) of any considered stator segment group has two stator segments of one or more stator segment group, in particular belonging to two different stator segment groups, being different from the considered stator segment group immediately circumferentially adjacent arranged.

5. Stator according to one of the preceding claims 1 or 2,
wherein the number of stator segment groups is four;
wherein each of the stator segments (S1, S2, S3, S4) of any considered stator segment group has:
one stator segment belonging to a stator segment group different from the considered stator segment group immediately circumferentially adjacent arranged, and
one stator segment belonging to the considered group immediately circumferentially adjacent arranged.

6. Stator according to one of the preceding claims, further comprising:
multiple, in particular multiple phase, bus bars (118, 530, 531, 532, 533), providing at least one bus bar for each stator segment group;
wherein the winding sets of each group of the stator segment groups are connected in parallel to each other using the bus bars.

7. Stator according to one of the preceding claims, further comprising:
two or more terminal boxes (535, 536), to each of which some of the winding sets and/or bus bars are connected.

8. Stator according to one of the preceding claims, further comprising:
multiple converters (111, 112) thereby providing for each stator segment group at least one converter,
wherein the winding sets (117) of each stator segment group (S1, S2) are connected to an associated converter (111, 112);
wherein a number of stator segment groups equals in particular a number of the converters.

9. Stator according to one of the preceding claims, wherein the winding sets of different stator segment groups are disconnected from each other.

10. Stator according to one of the preceding claims,
wherein coils of one winding sets of each stator segment are arranged in the slots according to a concentrated or distributed winding topology, and/or
wherein for at least one phase, coils of the winding set of each stator segment are connected to each other in parallel and/or in series, and/or
wherein wires of different phases of each winding set are connected at a common connection point.

11. Stator according to one of the preceding claims,
wherein a number of stator segment groups is two or four or six or a greater number,
wherein a number of segments is a multiple of the number of stator segments, in particular 12, 16, 20, 24 or a greater number.

12. Electric machine (100), in particular permanent magnet synchronous machine, comprising:
a stator (110) according to one of the preceding claims;
a rotor (105), in particular outer rotor, rotatably mounted relative to the stator;
in particular, for each of the stator segment groups, a converter (111, 112) connectable or connected to the winding set of the respective stator segment group.

13. Electric machine according to the preceding claim, configured to be operated if at least one stator segment group fails, in particular short-circuit condition.

14. Wind turbine (220), including an electrical machine (200) according to the preceding claim as a generator.
